# EUROPEAN PATENT APPLICATION

(11) **EP 4 336 603 A1**
(43) Date of publication of application: **13.03.2024**
(21) Application number: 22841682.2
(22) Date of filing: 04.03.2022
(51) Int. Cl.: H01M 8/0228, H01M 8/0213, H01M 8/0221, H01M 8/026

(54) **FUEL CELL SEPARATOR AND METHOD FOR MANUFACTURING SAME**

(30) Priority: 16.07.2021 JP 2021117582
(71) Applicant: Shin-Etsu Polymer Co., Ltd., Tokyo 100-0004 (JP)
(72) Inventor: TESHIMA Masahiro, Saitama-shi, Saitama 331-0811 (JP); OKADA Akira, Saitama-shi, Saitama 331-0811 (JP); HONDA Masayuki, Saitama-shi, Saitama 331-0811 (JP)
(74) Representative: Arnold & Siedsma
(86) International application number: PCT/JP2022/009322
(87) International publication number: WO 2023/286332

(57) **Abstract**

To provide a fuel cell separator having excellent strength, electrical conductivity, and gas barrier property, the present invention provides a fuel cell separator 1 comprising a plate 2 that contains, as constituent materials thereof, graphite in a particulate or fiber form and resin in a particulate or fiber form; and a barrier layer 3 having a better gas barrier property than that of the plate 2. The plate 2 comprises, on a surface thereof, a groove 30 serving as a flow path. The barrier layer 3 covers at least a surface on a front side and a surface on a rear side of the plate 2 including the groove 30 and the surfaces of the plate 2 other than the groove 30.

## Description

### Cross Reference

This application is based upon and claims the benefit of priority from Japanese Patent Application No. 2021-117582, filed in Japan on July 16, 2021, the entire contents of which are incorporated herein by reference. The contents of the patents, patent applications, and documents cited in the present application are incorporated herein by reference.

### Technical Field

The present invention is related to a fuel cell separator and a method for manufacturing the same.

### Background Art

Fuel cells are cells from which energy is taken out by using a reaction between hydrogen and oxygen. Because what is generated from the reaction is water, fuel cells are known to be earth environment-friendly cells. In particular, for the capability of achieving high power density while being compact and lightweight, solid polymer fuel cells are considered as a favorable candidate for batteries of automobiles, communication devices, electronic devices and the like, while the actual implementation thereof is also partially underway. A fuel cell is a cell stack in which a plurality of cells is stacked together. Wall members called separators are arranged between the cells. Each separator is a partition for separating paths for hydrogen and oxygen positioned adjacent to each other and plays a role in making the hydrogen and the oxygen flow while being in uniform contact with the entire surface of an ion exchange membrane. For this reason, grooves serving as flow paths are formed on the separators.

From a viewpoint of constituent materials, separators can roughly be divided into a metal material group and a carbon material group. The material used for separators in the metal material group may be generally stainless steel, aluminum or an alloy thereof, or titanium or an alloy thereof may be used. The separators in the metal material group have excellent processability and can be very thin, due to strength and ductility specific to metal. However, the separators in the metal material group have higher specific gravity than separators in the carbon material group (explained later) and thus contradict the idea of making fuel cells lightweight. In addition, the separators in the metal material group have disadvantages where corrosion resistance is low and a passive film may be formed by some of the materials. Because of the possibility of an increase in electrical resistance of the separators, corrosion and passive films of metal materials are not desirable. When separators in the metal material group are coated with precious metal plating or sputtering to improve corrosion resistance, costs may increase. To keep the costs down, a method is known by which ridge parts of flow paths formed on a surface of a separator are formed with a photoresist film (see Patent Literature 1).

In contrast, the separators in the carbon material group have advantages where specific gravity is lower while corrosion resistance is higher, in comparison to the separators in the metal material group. However, the separators in the carbon material group are inferior in processability and mechanical strength. In addition, there is demand for making electrical resistance even lower (i.e., making electrical conductivity even higher). As a method for improving the mechanical strength, a separator is known, for example, in which graphite particles are dispersed in thermoplastic resin (see Patent Literature 2).

### Citation List

### Patent Literature

Patent Literature 1: Japanese Patent Laid-Open No. 2011-090937
Patent Literature 2: Japanese Patent Laid-Open No. 2006-294407

### Summary of Invention

### Technical Problem

The method by which graphite particles are dispersed in thermoplastic resin is able to realize a stronger separator to a certain extent. However, the separators in the carbon material group are required to have even higher strength. In addition, there is also a demand for higher electrical conductivity and for a gas barrier property, which is the capability of preventing gas from passing through.

It is an object of the present invention to provide a fuel cell separator having excellent strength, electrical conductivity, and gas barrier property.

### Solution to Problem

(1) A fuel cell separator according to an embodiment for achieving the abovementioned object comprises:
   a plate that contains, as constituent materials thereof, graphite in a particulate or fiber form and resin in a particulate or fiber form; and
   a barrier layer having a better gas barrier property than that of the plate, wherein
   the plate comprises, on a surface thereof, a groove serving as a flow path, and
   the barrier layer covers at least a surface on a front side and a surface on a rear side of the plate including the groove and surfaces of the plate other than the groove.
(2) In a fuel cell separator according to another embodiment, the barrier layer may preferably be a film-like covering layer different from the plate.
(3) In a fuel cell separator according to yet another embodiment, the barrier layer may preferably be a filling layer in which resin or rubber fills spaces between particles or fibers structuring the plate.
(4) In a fuel cell separator according to yet another embodiment, the barrier layer may preferably comprise the filling layer and a film-like covering layer different from the plate.
(5) In a fuel cell separator according to yet another embodiment, the barrier layer may preferably wrap the plate.
(6) In a fuel cell separator according to yet another embodiment, the barrier layer may preferably contain at least one selected from between polyether ether ketone and polyphenylene sulfide.
(7) In a fuel cell separator according to yet another embodiment, the resin structuring the plate and resin structuring the barrier layer may preferably be thermoplastic resin of a mutually same type.
(8) In a fuel cell separator according to yet another embodiment, at least one of the resin structuring the plate and resin structuring the barrier layer may preferably contain polyphenylene sulfide as a principal material thereof.
(9) A fuel cell separator manufacturing method according to an embodiment for achieving the abovementioned object is for manufacturing a fuel cell separator which comprises a plate that contains, as constituent materials thereof, graphite in a particulate or fiber form and resin in a particulate or fiber form and a barrier layer having a better gas barrier property than that of the plate. The method comprises:
   a first film arranging step of arranging, in a mold, a first film for forming the barrier layer;
   a shaping material arranging step of arranging, on the first film, a shaping material which is one selected from among a mixture obtained by mixing together at least the graphite and the resin, a grooved plate that is the plate comprising, on a thereof, a groove serving as a flow path, and a precursor plate that is the grooved plate in a state without the groove;
   a second film arranging step of arranging, over the shaping material, a second film for forming the barrier layer; and
   a shaping step of performing a shaping process by closing the mold while the shaping material is sandwiched between the first film and the second film, to form the barrier layer on both of the surfaces of the plate on a front side and on a rear side.
(10) In a fuel cell separator manufacturing method according to another embodiment, preferably,
   the shaping material may be either the mixture obtained by mixing together at least the graphite and the resin or the precursor plate,
   the mold may comprise, on an inner side thereof, an uneven surface for transferring the groove, and
   in the shaping step, either the mixture or the precursor plate may be shaped, the groove may be formed, and the barrier layer may be formed on the surface on the front side and on the surface on the rear side of the plate, by using the mold comprising the uneven surface.
(11) In a fuel cell separator manufacturing method according to yet another embodiment, preferably,
   the shaping material may be the grooved plate,
   the mold may comprise, on an inner side thereof, an uneven surface that is insertable into the groove, and
   in the shaping step, the barrier layer may be formed on a surface on the front side and on a surface on the rear side of the grooved plate, by using the mold.
(12) In a fuel cell separator manufacturing method according to yet another embodiment, preferably,
   as a result of the shaping step, the first film and the second film may become the barrier layer in a bag-like form to wrap the plate.
(13) In a fuel cell separator manufacturing method according to yet another embodiment,
   the resin in the mixture obtained by mixing together at least the graphite and the resin may preferably be resin powder in a flake form.
(14) In a fuel cell separator manufacturing method according to yet another embodiment,
   the resin structuring the plate and resin structuring the barrier layer may preferably be thermoplastic resin of a mutually same type.
(15) In a fuel cell separator manufacturing method according to yet another embodiment,
   at least one of the resin structuring the plate and resin structuring the barrier layer may preferably contain polyphenylene sulfide as a principal material thereof.

### Advantageous Effect of Invention

The present invention is able to provide the fuel cell separator having excellent strength, electrical conductivity, and gas barrier property.

### Brief Description of Drawings

[Figure 1] Figure 1 presents a plan view of a fuel cell separator according to an embodiment of the present invention.
[Figure 2A] Figure 2A presents a cross-sectional view of the fuel cell separator in Figure 1 at A-A and an enlarged view of B which is a part thereof.
[Figure 2B] Figure 2B presents enlarged views of variations a, b, and c of C which is a part of B being a part of Figure 2A.
[Figure 3] Figure 3 shows an outline of fuel cell separator manufacturing steps in an embodiment of the present invention.
[Figure 4] Figure 4 presents cross-sectional views of a mold or the like, indicating progress statuses in a first film arranging step, a shaping material arranging step, and through a second film arranging step shown in Figure 3.
[Figure 5] Figure 5 presents cross-sectional views of a mold or the like, indicating progress statuses at a shaping step and thereafter, following Figure 4.
[Figure 6] Figure 6 presents a cross-sectional view of a mold or the like, indicating a status in a shaping material arranging step, when a precursor plate is used as a shaping material, in a fuel cell separator manufacturing method according to a first modification example.
[Figure 7] Figure 7 presents a cross-sectional view of a mold or the like, indicating a status in a shaping material arranging step, when a grooved plate is used as a shaping material, in a fuel cell separator manufacturing method according to a second modification example.

### Reference Signs List

1 separator (fuel cell separator); 2 plate; 2a mixture (an example of a shaping material); 3 barrier layer; 4 first film; 5 second film; 30, 32 groove; 31 surface; 40 first mold (a component part of a mold); 41, 51 inner side; 42, 52 uneven surface; 50 second mold (a component part of the mold); 60 mold; 80 precursor plate (another example of the shaping material); 90 grooved plate (yet another example of the shaping material); F covering layer; M filling layer.

### Description of Embodiments

Embodiments of the present invention will be explained with reference to the drawings. The embodiments described below do not limit the invention set forth in the patent claims. Further, the various elements described in the embodiments and combinations thereof are not all necessarily requisite for the problem-solving means of the present invention.

### 1. A fuel cell separator

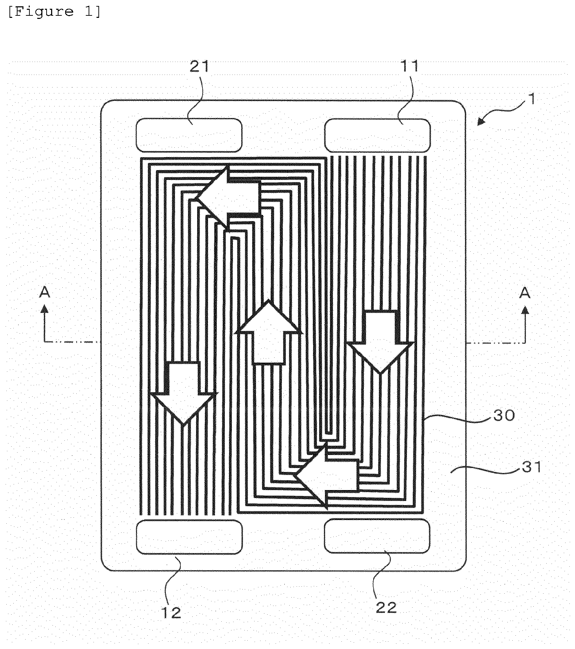

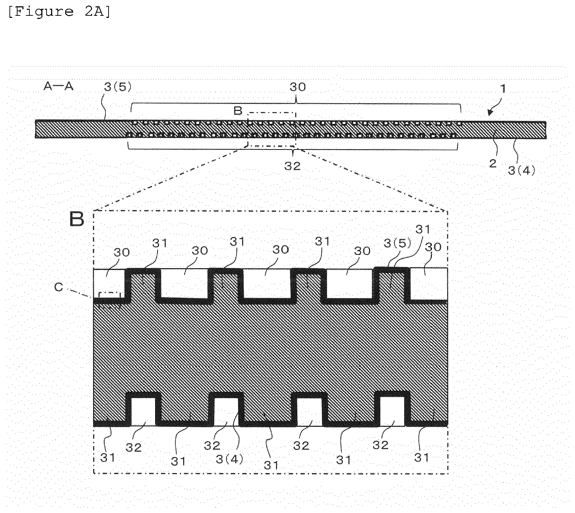

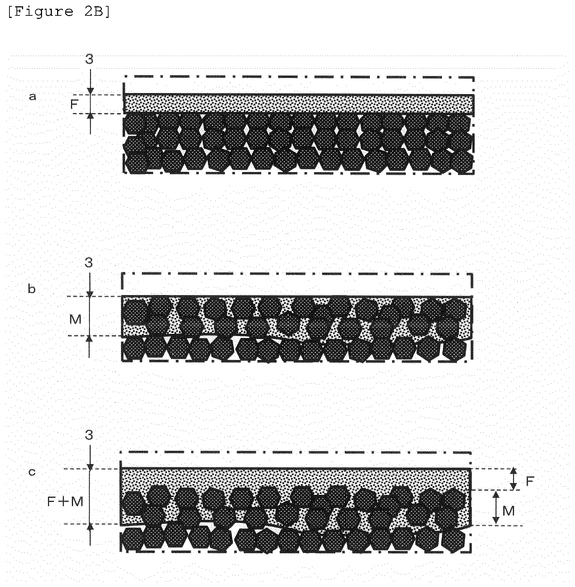

Figure 1 presents a plan view of a fuel cell separator according to an embodiment of the present invention. Figure 2A presents a cross-sectional view of the fuel cell separator in Figure 1 at A-A and an enlarged view of B which is a part thereof. Figure 2B presents enlarged views of variations a, b, and c of C which is a part of B being a part of Figure 2A.

A fuel cell separator (hereinafter, simply "separator") 1 according to the present embodiment is a plate-like body having a substantially rectangular shape in a planar view. In a fuel cell, the separator 1 is the plate-like body that may sandwich, from both sides, a Membrane Electrode Assembly (MEA) in which an electrolyte membrane is interposed between an air electrode and a hydrogen electrode positioned on the two surfaces thereof. In the present embodiment, the separator 1 is interpreted in a broader sense including an anode-side separator provided on the hydrogen electrode ("anode electrode") side and a cathode-side separator provided on the air-electrode ("cathode electrode") side.

The separator 1 comprises through holes 11, 12, 21, and 22 penetrating in the thickness direction thereof. The through holes 11 and 21 are positioned on one end side of the separator 1. The through hole 12 is positioned on the other end side opposite the one end side of the separator 1, while being positioned opposite the through hole 21 in a planar view of the separator 1. The through hole 22 is positioned on the other end side opposite the one end side of the separator 1, while being positioned opposite the through hole 11 in a planar view of the separator 1. On one of the surfaces (a front surface) of the separator 1, grooves 30 serving as flow paths are formed. A surface 31 other than the grooves 30 is formed as a raised plane in contrast to the grooves 30. On the other surface (a rear surface) on the opposite side of the one surface of the separator 1, grooves 32 serving as flow paths are formed. A surface 31 other than the grooves 32 is formed as a raised plane in contrast to the grooves 32.

When the separator 1 is a cathode-side separator, the through hole 11 serves as an oxidization gas supply opening. The through hole 12 serves as an oxidization gas discharge opening. The through hole 21 serves as a hydrogen gas discharge opening. The through hole 22 serves as a hydrogen gas supply opening. The oxidization gas may be air, for example, but may be oxygen. The grooves 30 on the front surface of the separator 1 serve as flow paths in which the oxidization gas flows. The grooves 32 on the rear surface of the separator 1 serve as flow paths in which cooling water flows. In Figure 1, the white arrows indicate flows of the oxidization gas.

When the separator 1 is an anode-side separator, the through hole 11 serves as a hydrogen gas supply opening. The through hole 12 serves as a hydrogen gas discharge opening. The through hole 21 serves as an oxidization gas discharge opening. The through hole 22 serves as an oxidization gas supply opening. The grooves 30 on the front surface of the separator 1 serve as flow paths in which the hydrogen gas flows. The grooves 32 on the rear surface of the separator 1 serve as flow paths in which cooling water flows.

The separator 1 comprises a plate 2 and a barrier layer 3. The plate 2 is a shaped body containing graphite and resin and has a fine structure in which the graphite is dispersed in the resin that was melted and subsequently solidified. Before being shaped, the graphite structuring the plate 2 is preferably in a particulate form or a fiber form. Before being shaped, the resin structuring the plate 2 is preferably in a particulate form or a fiber form. In these situations, examples of the particulate form include a flake form (which may be called flakes). Examples of the fiber form include a whisker-like form. A more preferable combination of forms of the graphite and the resin before being shaped is the graphite in a particulate or fiber form combined with the resin in a flake form. The plate 2 comprises grooves corresponding to the grooves 30 and 32 of the separator 1.

The resin structuring the plate 2 is not particularly limited, but is preferably thermoplastic resin. Resin having excellent heat resistance is more preferable for the resin to structure the plate 2. More specifically, examples include: polyphenylene sulfide (PPS), polyether ether ketone (PEEK), a polyamide (PA), polyether ketone ether ketone ketone (PEKEKK), polyether ketone (PEK), a liquid crystal polymer (LCP), polytetrafluoroethylene (PTFE), a copolymer of tetrafluoroethylene and ethylene (ETFE), polychlorotrifluoroethylene (PCTFE), polyimide (PI), a polyamide-imide (PAI), polyethersulfone (PES), polyphenylsulfone (PPSU), polyetherimide (PEI), and a polysulfone (PSU). Among these, PPS or PEEK is particularly preferable. Examples of PPS include M2888 and E2180 produced by Toray Industries, Inc. and FZ-2140 and FZ-6600 produced by Dainippon Ink and Chemicals, Inc.

The average particle diameter of the resin used before shaping the plate 2 is preferably in the range of 1 µm to 300 µm inclusive, more preferably in the range of 5 µm to 150 µm inclusive, and even more preferably in the range of 10 µm to 100 µm inclusive. In this situation, the average particle diameter denotes a particle diameter measured by using a laser diffraction/scattering particle diameter distribution measuring method. The same applies to the method for measuring the average particle diameters hereinafter.

The graphite structuring the plate 2 may be any of the following: artificial graphite, expanded graphite, natural graphite, and others. In this situation, the expanded graphite denotes graphite or a graphite intercalation compound obtained by expanding the spaces between graphite layers by having a layer of another substance enter (called "intercalation") on a specific plane in a structure in which regular hexagonal planes of graphite are stacked together. As the expanded graphite, BSP-60A (having an average particle diameter of 60 µm) or EXP-50SM produced by Fuji Graphite Works Co., Ltd. may be used, for example. As the artificial graphite, 1707SJ (average particle diameter: 125 µm), AT-No. 5S (average particle diameter: 52 µm), AT-No. 10S (average particle diameter: 26 µm), or AT-No. 20S (average particle diameter: 10 µm) produced by Oriental Sangyo Co., Ltd. or PAG or HAG produced by Nippon Graphite Industries, Co., Ltd. may be used, for example. As the natural graphite, CNG-75N (average particle diameter: 43 µm) produced by Fuji Graphite Works Co., Ltd. or CPB (scale-shaped graphite powder having an average particle diameter of 19 µm) produced by Nippon Graphite Industries, Co., Ltd. may be used. Further, the shapes of the graphite particles are not particularly limited. It is possible to select from flakes, scale-like shapes, and spherical shapes, as appropriate. Further, the graphite may partially contain amorphous carbon.

The average particle diameter of the graphite used before shaping the plate 2 is preferably in the range of 1 µm to 500 µm inclusive, more preferably in the range of 3 µm to 300 µm inclusive, and even more preferably in the range of 10 µm to 150 µm inclusive.

The particle diameters of the graphite and the resin may be adjusted separately before the two are mixed together to be used for shaping the plate 2. Alternatively, the graphite and the resin may be kneaded together at first, before being pulverized so that the particle diameters are adjusted for the use in shaping the plate 2. When the graphite and the resin are kneaded together before being pulverized so that the particle diameters are adjusted, the average particle diameter of a powder mixture is preferably in the range of 1 µm to 500 µm inclusive, more preferably in the range of 3 µm to 300 µm inclusive, and even more preferably in the range of 10 µm to 150 µm inclusive.

The mass ratio between the graphite and the resin structuring the plate 2 can be defined as: graphite:resin = 70 to 95 parts by mass:30 to 5 parts by mass. For example, by mixing 5 parts by mass of the resin with the graphite in an amount ranging from 70 parts by mass to 95 parts by mass inclusive, it is possible to obtain a constituent material of the separator 1. As another example, by mixing 30 parts by mass of the resin with the graphite in an amount ranging from 70 parts by mass to 95 parts by mass inclusive, it is also similarly possible to obtain a constituent material of the separator 1. It is preferable to configure the separator 1 to contain more graphite than resin by a mass ratio. A more preferable mass ratio between the graphite and the resin is achieved by mixing 1 part by mass of the resin, with 10 parts by mass of the graphite or with the graphite in an amount ranging from 10.1 parts by mass to 20 parts by mass inclusive. As explained above, when more graphite than resin is used by parts by mass, because graphite particles have more contact sites with one another than in conventional separators, it is possible to further lower the electrical resistance (i.e., to further increase the electrical conductivity) of the separator 1. In a typical sample of the separator 1, volume resistivity is 5 mΩcm or lower.

The barrier layers 3 cover at least the surface on the front side and the surface on the rear side of the plate 2, including the grooves 30, 32 and the surfaces 31 of the plate 2 other than the grooves 30, 32. In other words, the barrier layers 3 cover both surfaces of the plate 2, namely the surface on the front side and the surface on the rear side, including the faces inside the grooves 30 and 32. The barrier layers 3 are, for example, each a film-like covering layer different from the plate 2 and are formed with two types of films that are separate from each other or fused together, namely, a first film 4 being an example of a barrier layer covering the surface on the front side and a second film 5 being an example of another barrier layer covering the surface on the rear side. In the present embodiment, the barrier layers 3 are separate as the first film 4 and the second film 5, which adhere to the surface on the front side and to the surface on the rear side of the plate 2, respectively. However, the barrier layers 3 may have a bag-like form in which the first film 4 and the second film 5 are joined together, to wrap the plate 2.

Figure 2B shows primary modes a, b, and c of the barrier layers 3. In mode "a", on a surface of the plate 2, a film of which a principal material is preferably resin or rubber is provided. In mode "a", a barrier layer 3 is a film-like covering layer F different from the plate 2. Further, in mode "b", a barrier layer 3 is provided so that the plate 2 is, in the vicinity of the surface thereof, impregnated with resin or rubber. In mode "b", the barrier layer 3 is a filling layer M in which the resin or the rubber fills the spaces between the particles or fibers structuring the plate 2. Further, in mode "c", a barrier layer 3 includes a filling layer M and a covering layer F. As explained herein, the barrier layer 3 preferably uses one of modes a, b, and c. However, as long as the barrier layer 3 has a better gas barrier property than that of the plate 2, the barrier layer 3 may use a mode other than modes a, b, and c. In the present application, the "gas barrier property" or a "gas barrier capability" denotes a characteristic that prevents gas from passing through. Next, the barrier layer 3 in mode "a" will primarily be explained.

The barrier layer 3 is preferably a layer of resin or rubber. For the barrier layer 3, one or two or more may be selected as principal material(s) from among the abovementioned preferable options for the resin to structure the plate 2, and more preferably, at least one of PEEK and PPS may be used as the principal material(s). In this situation, the "principal material" denotes a material that accounts for more than 50 mass % of the barrier layer 3. As long as the principal material accounts for more than 50 mass % relative to the mass of the barrier layer 3, the percentage may be 51 mass %, 60 mass %, 70 mass %, 80 mass %, 90 mass %, 95 mass %, or 100 mass %, for example.

The thickness of the barrier layer 3 is preferably in the range of 2 µm to 50 µm inclusive and more preferably in the range of 4 µm to 35 µm inclusive. When the thickness of the barrier layer 3 is 2 µm or larger, or even 4 µm or larger, it is possible to further enhance the gas barrier property, to further enhance the strength (the bending strength), and to further enhance tractability of the separator 1. On the contrary, when the thickness of the barrier layer 3 is 50 µm or smaller, or even 35 µm or smaller, it is possible to further lower the volume resistivity. The first film 4 and the second film 5 may have mutually the same thickness or mutually-different thicknesses. In the present embodiment, the strength denotes a bending strength measured according to JIS K 7171.

The resin structuring the plate 2 and the resin structuring the barrier layer 3 may be the same type of thermoplastic resin. In that situation, because it is possible to integrally form the resin in the vicinity of the surface of the plate 2 with the barrier layer 3 covering the plate 2, it is possible to further increase the strength of the separator 1. The thermoplastic resin is, preferably, PEEK or PPS.

### 2. A fuel cell separator manufacturing method

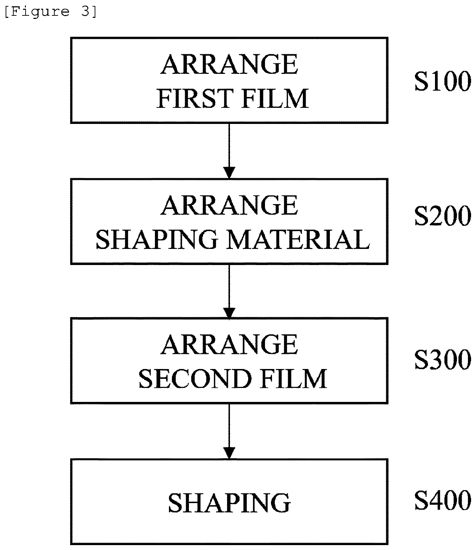

Figure 3 shows an outline of fuel cell separator manufacturing steps in an embodiment of the present invention.

A fuel cell separator manufacturing method according to the present embodiment is a method for manufacturing the fuel cell separator 1 comprising: a plate 2 that contains, as constituent materials thereof, the graphite in a particulate or fiber form and the resin in a particulate or fiber form; and the barrier layers 3 having a better gas barrier property than that of the plate 2. The present manufacturing method comprises a first film arranging step (S 100), a shaping material arranging step (S200), a second film arranging step (S300), and a shaping step (S400), and the procedure preferably goes through S100, S200, S300, and S400 in the stated order.

The first film arranging step is a step of arranging, in a mold, the first film 4 for forming a barrier layer 3. The shaping material arranging step is a step of arranging, on the first film 4, a mixture (an example of the "shaping material") obtained by mixing together at least the graphite and the resin. In place of the mixture, it is also acceptable to arrange a grooved plate that is the plate 2 comprising grooves 30 and 32 on the surfaces thereof or a precursor plate that is the grooved plate in a state without the grooves 30 and 32.

The second film arranging step is a step of arranging, over the shaping material, the second film 5 for forming another barrier layer 3. As a result of the second film arranging step, it is possible to have, in the mold, the shaping material sandwiched between the first film 4 and the second film 5. The shaping step is a step of performing a shaping process by closing the mold while the shaping material is sandwiched between the first film 4 and the second film 5, to form the barrier layers 3 on both surfaces on the front side and the rear side of the grooved plate. When the shaping material is the abovementioned mixture or the abovementioned precursor plate, it is possible, in the shaping step, to form the grooves 30 and 32, to perform the shaping process to achieve the shape of the plate 2, and to form the barrier layers 3 on the surfaces of the plate 2, all at the same time. In contrast, when the shaping material is a grooved plate (a type of the plate 2), the first film 4 and the second film 5 are adhered onto the plate 2, and subsequently, the barrier layers 3 are formed.

Next, the fuel cell separator manufacturing method will be explained further in detail.

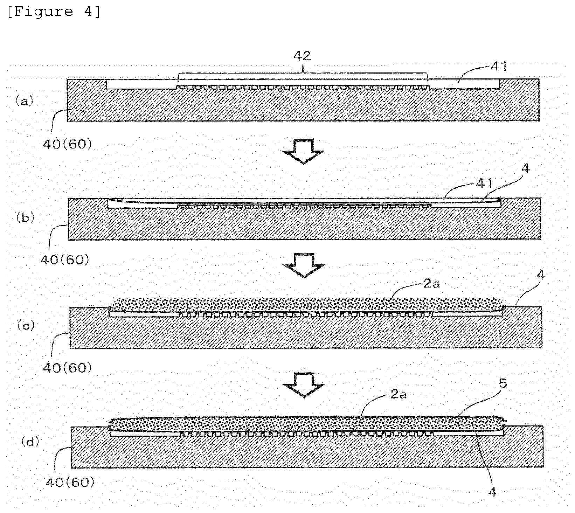

Figure 4 presents cross-sectional views of a mold or the like, indicating progress statuses in the first film arranging step, the shaping material arranging step, and through the second film arranging step shown in Figure 3.

### (1) The first film arranging step

To begin with, one of the mold sections of a separate-type mold 60, namely a mold (hereinafter, "first mold") 40 is prepared (see (a) in the drawing). On an inner side (more specifically, the inner bottom face) 41 of the first mold 40, an uneven surface 42 for transferring the grooves 32 is formed. Subsequently, the first film 4 is placed on the inner side 41 of the first mold 40 to cover the uneven surface 42 of the first mold 40 (see (b) in the drawing).

### (2) The shaping material arranging step

Subsequently, on the first film 4 placed on the inner side 41 of the first mold 40, a mixture 2a obtained by mixing together at least the graphite and the resin is placed (see (c) in the drawing). Preferably, the mixture 2a is obtained by implementing, in advance, a method such as ball milling to perform pulverizing and mixing processes or a mixing process only. It is preferable when the mixture 2a is arranged on the first film 4 while the thickness thereof is more uniform.

### (3) The second film arranging step

After that, the second film 5 is placed over the mixture 2a (see (d) in the drawing). As a result, on the inner side 41 of the first mold 40, the first film 4, the mixture 2a, and the second film 5 are layered in this order.

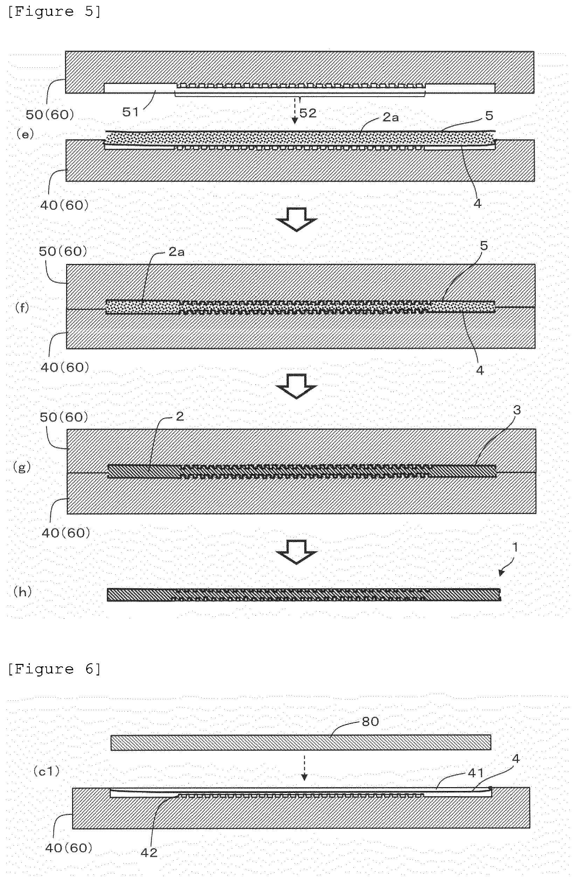

Figure 5 presents cross-sectional views of the mold or the like, indicating progress statuses at the shaping step and thereafter, following Figure 4.

### (4) The shaping step

Subsequent to the second film arranging step, the other mold section of the separate-type mold 60, namely a mold (hereinafter, "second mold") 50 is placed over the first mold 40, and the mold 60 is closed (see (e) and (f) in the drawing). On an inner side (more specifically, the inner bottom face) 51 of the second mold 50, an uneven surface 52 for transferring the grooves 30 is formed. After the mold 60 is closed, the mixture 2a is shaped by applying pressure and heat (see (g) in the drawing). In other words, by using the mold 60 having the uneven surfaces 42 and 52, the mixture 2a is shaped; the grooves 30 and 32 are formed; and the barrier layers 3 are formed on the surface on the front side and on the surface on the rear side of the shaped body from the mixture 2a. The first film 4 and the second film 5 are covering the surface on the front side, the surface on the rear side, and a part of the lateral faces (which may be called "end faces") of the plate 2, to serve as the barrier layers 3. In the present embodiment, the barrier layers 3 do not completely wrap the plate 2; however, the barrier layers 3 may have a bag-like form by which the surface on the front side, the surface on the rear side, and the end faces of the plate 2 are all covered. The shaping process may be performed, for example, by applying heat under low pressure, applying heat and raising pressure, and cooling while the pressure is maintained, in the stated order. The maximum temperature at the time of the shaping process in the shaping step is preferably in the range of 300°C to 450°C inclusive. For example, when PPS is used for the first film 4 and the second film 5, the maximum temperature is preferably in the range of 320°C to 380°C inclusive, and more preferably in the range of 330°C to 360°C inclusive. Alternatively, when PEEK is used for the first film 4 and the second film 5, for example, the maximum temperature is preferably in the range of 350°C to 450°C inclusive, and more preferably in the range of 360°C to 400°C inclusive. The temperature at the time of the shaping process may be changed as appropriate in accordance with the type of the first film 4, the type of the second film 5, and the type of the resin used for the plate 2, so that the resin used for the plate 2 fixes the graphite by being melted or softened, while the first film 4 and the second film 5 are tightly adhered to and fixed with the plate 2 so as not to be separated easily.

### (5) A taking-out step

After the shaping step, a shaped body 70 is taken out of the mold 60 (see (h) in the drawing).

Figure 6 presents a cross-sectional view of the mold or the like, indicating a status in the shaping material arranging step, when a precursor plate is used as a shaping material, in a fuel cell separator manufacturing method according to a first modification example.

In the first modification example, as the shaping material, a precursor plate 80 that is a grooved plate in a state without the grooves 30 and 32 is used. The precursor plate 80 is obtained, prior to the shaping material arranging step, by putting the mixture 2a into the mold 60 and performing a pre-shaping process. Unlike the example where the plate 2 is shaped completely, the pre-shaping process (which may be referred to as a temporary shaping process or a semi-shaping process) denotes a shaping process by which the mixture 2a is only simply put in a form, but the graphite particles remain in the state of having not completely been bound together by the resin. The feature where the uneven surfaces 42 and 52 for the purpose of transferring the grooves 30 and 32 are provided on the inner side of the mold 60 is the same as that in the manufacturing method previously explained with reference to Figure 4. In the shaping material arranging step according to the first modification example, the precursor plate 80 is arranged on the first film 4 (see (c1) in the drawing). In the subsequent shaping step, a shaping process is performed by closing the mold 60 while the precursor plate 80 is sandwiched between the first film 4 and the second film 5, to be able to form the barrier layers 3 by causing the first film 4 and the second film 5 to adhere to the surfaces of the grooved plate.

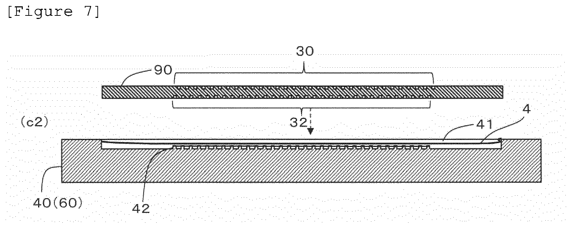

Figure 7 presents a cross-sectional view of the mold or the like, indicating a status in the shaping material arranging step, when a grooved plate is used as a shaping material, in a fuel cell separator manufacturing method according to a second modification example.

In the second modification example, a grooved plate 90 is used as the shaping material. The grooved plate 90 is obtained, prior to the shaping material arranging step, by putting the mixture 2a into the mold 60 and performing a shaping process. The mold 60 has, on the inner side thereof, the uneven surfaces 42 and 52 that are insertable in the grooves 30 and 32. In the shaping material arranging step in the second modification example, the grooved plate 90 is arranged on the first film 4 (see (c2) in the drawing). In that situation, the uneven surfaces 42 and 52 fit into the grooves on the front surface and the grooves on the rear surface of the grooved plate 90. In the subsequent shaping step, a shaping process is performed by closing the mold 60 while the grooved plate 90 is sandwiched between the first film 4 and the second film 5, to be able to form the barrier layers 3 on the surfaces of the grooved plate 90.

### 3. Other Embodiments

Several preferable embodiments of the present invention have thus been explained. However, the present invention is not limited to those embodiments and may be carried out with various modifications.

The grooves 30 in the separator 1 may be grooves forming flow paths other than the flow paths in which the gas flows in the directions shown with the white arrows in Figure 1. Further, the grooves 32 may be grooves forming flow paths in any form. For example, the grooves 30 may be grooves forming linear flow paths extending from one end to the other end of the separator 1, while the grooves 32 may be grooves forming linear flow paths extending in a substantially perpendicular direction to the grooves 30. Further, the separator 1 may be formed without one or both of the grooves 30 and the grooves 32.

In the above embodiments, the precursor plate 80 is not provided with any grooves corresponding to the grooves 30 and 32; however, the precursor plate 80 may be provided with grooves shallower than the grooves 30 and 32. In that situation, after closing the mold 60 and performing the shaping process, it is possible to deepen and transform the shallower grooves formed in advance into the grooves 30 and 32.

After the shaping step, a trimming step may be performed to trim an extra area of the first film 4 or the second film 5.

The manufacturing method described above is a method for manufacturing the fuel cell separator in which the barrier layers 3 are each a layer of resin or rubber; however, the manufacturing method may be a method for manufacturing a fuel cell separator in which the barrier layers 3 are each a layer in either mode "b" or mode "c" in Figure 2B.

### Examples

Next, the examples of the present invention will be explained while being compared with comparison examples. The present invention is not limited to the following examples.

### 1. Main ingredients of the plate

### (1) Graphite

As graphite powder serving as a constituent material of the plate of a fuel cell separator (which hereinafter may be referred to as a "separator"), 1707SJ produced by Oriental Kougyou Co., Ltd. was used.

### (2) Resin

As the resin serving as a constituent material of the plate of the separator, polyphenylene sulfide (PPS) powder was used. Used as the PPS was PPS fine powder adjusted to have an average particle diameter of 50 µm obtained by freezing and pulverizing PPS powder in a flake form of Torelina M2888 produced by Toray Industries, Inc.

### 2. Pre-processing of materials before the shaping process

Ball-mill pulverization using zirconia balls was performed on the abovementioned graphite powder and the abovementioned resin powder, to mix and pulverize the two types of powder. The ball-mill pulverization was ended when it was confirmed that the granularity of the powder mixture reached an average particle diameter of 90 ± 10 µm by measuring the granularity distribution (through a measuring process implementing a laser diffraction/scattering particle diameter distribution measuring method).

### 3. Film

As the films for the separator, PPS and polyether ether ketone (PEEK) were each used. As the film made of PPS, a plurality of types of films having thicknesses in the range of 4 µm to 35 µm (model numbers: Torelina 4-1X00, Torelina 9-3071) produced by Toray Industries, Inc. were used. As the film made of PEEK, a film having a thickness in the range of 6 µm to 35 µm produced by Shin-Etsu Polymer Co., Ltd. while using a raw material (model number: KT-851NL SP) produced by Solvay Specialty Polymers was used.

### 4. Mold

Used as the mold was a mold of a top/bottom separate type using pre-hardened steel NAK80 produced by Daido Steel Co., Ltd. as a material. Formed inside the mold in a closed state is a space (approximately 63 cm³) in which it is possible to shape the separator. Further, formed in the inner bottom part of each of the top and the bottom molds is the uneven surface for forming the grooves of the separator.

### 5. Evaluation methods

### (1) Formability of the grooves

When the appearance of any of ridges and valleys of the separator grooves exhibited a chip or roughness that might be unfilled, the product was evaluated as a fail. When the shaping was possible without these defects, the product was evaluated as a pass.

### (2) Volume resistivity

The volume resistivity values of the separators were measured by using a device (Loresta-GX T-700) produced by Mitsubishi Chemical Analytech Co., Ltd., according to JIS K 7194. A volume resistivity value smaller than 2.0 mΩcm was evaluated as a pass (A). A volume resistivity value larger than 2.0 mΩcm but equal to or smaller than 3.0 mΩcm was evaluated as a pass (B). A volume resistivity value larger than 3.0 mΩcm but equal to or smaller than 4.0 mΩcm was evaluated as a pass (C). A volume resistivity value larger than 4.0 mΩcm but equal to or smaller than 5.0 mΩcm was evaluated as a pass (D). A volume resistivity value larger than 5.0 mΩcm was evaluated as a fail.

### (3) Bending test

A bending test for the separators was performed by using a device (a Tensilon universal tester, RTC-1310A) produced by Orientec Co., Ltd., according to JIS K 7171.

### • Bending strength

A bending strength equal to or larger than 60 MPa was evaluated as a pass (A). A bending strength equal to or larger than 50 MPa but smaller than 60 MPa was evaluated as a pass (B). A bending strength smaller than 50 MPa was evaluated as a fail.

### • Bending strain

A bending strain equal to or larger than 0.80% was evaluated as a pass (A). A bending strain equal to or larger than 0.65% but smaller than 0.80% was evaluated as a pass (B). A bending strain equal to or larger than 0.50% but smaller than 0.65% was evaluated as a pass (C). A bending strain smaller than 0.50% was evaluated as a fail.

### (4) Gas permeability coefficient

The gas permeability coefficients of the separators were measured with helium gas, by using a gas permeability measuring device (K-315-N-03) produced by Rika Seiki Kogyo Co., Ltd. according to JIS K 7126-1. A permeability coefficient smaller than 1.0 × 10⁻¹⁸ mol·m/m²·sec·Pa was evaluated as a pass (A). A permeability coefficient equal to or larger than 1.0 × 10⁻¹⁸ but smaller than 1.0 × 10⁻¹⁶ mol·m/m²·sec·Pa was evaluated as a pass (B). A permeability coefficient equal to or larger than 1.0 × 10⁻¹⁶ but smaller than 1.0 × 10⁻¹⁵ mol·m/m²·sec·Pa was evaluated as a pass (C). A permeability coefficient equal to or larger than 1.0 × 10⁻¹⁵ but smaller than 1.0 × 10⁻¹⁴ mol·m/m²·sec·Pa was evaluated as a pass (D). A permeability coefficient equal to or larger than 6.0 × 10⁻¹⁴ mol·m/m²·sec·Pa was evaluated as a fail.

### (5) Overall evaluations

To evaluate the property values, total scores of the examples and the comparison examples were tallied by converting A: 4 points, B: 3 points, C: 2 points, and D: 1 point. Evaluations based on the scores are as follows:
Evaluated as AAA: a total score of 18 points
Evaluated as AA: a total score of 17 points
Evaluated as A: a total score of 16 or 15 points
Evaluated as Fail: When there was at least one item evaluated as a fail

### 6. Manufacturing the fuel cell separators

### <Examples>

### (1) Example 1

A PEEK film having a thickness of 6 µm was placed in the recessed part inside the bottom mold structuring the separate-type mold, and the mixture (the graphite + PPS) in the powder state resulting from the ball-mill pulverization was supplied to the top of the film. The mixture was a powder mixture from 120 g of graphite powder and 12 g of PPS powder (corresponding to 1000 parts by mass of graphite mixed with 100 parts by mass of PPS). After that, the thickness of the mixture was made substantially uniform before a PEEK film having a thickness of 6 µm was placed thereon. Subsequently, a shaping process was performed by closing together the top mold and the bottom mold structuring the separate-type mold. The shaping process was performed with surface pressure of 480 kgf/cm², and the workpiece was held for three minutes so that the temperature of the mold increased up to 360°C. When the shaping process was finished, the mold was opened to take out the shaped body, and the manufacture of the separator was thus finished. The separator was evaluated by using the abovementioned evaluation method.

### (2) Example 2

A separator was manufactured and evaluated under the same conditions as those in Example 1, except for using a PPS film having a thickness of 4 µm in place of the PEEK film having a thickness of 6 µm, and changing the temperature at the time of the shaping process from 360°C to 330°C.

### (3) Example 3

A separator was manufactured and evaluated under the same conditions as those in Example 1, except for using a PPS film having a thickness of 9 µm in place of the PEEK film having a thickness of 6 µm, and changing the temperature at the time of the shaping process from 360°C to 330°C.

### (4) Example 4

A separator was manufactured and evaluated under the same conditions as those in Example 1,
by using a PEEK film having a thickness of 15 µm in place of the PEEK film having a thickness of 6 µm.

### (5) Example 5

A separator was manufactured and evaluated under the same conditions as those in Example 1,
by using a PEEK film having a thickness of 35 µm in place of the PEEK film having a thickness of 6 µm.

### (6) Example 6

A separator was manufactured and evaluated under the same conditions as those in Example 1, except for changing the duration of the holding in the shaping process to one minute.

### (7) Example 7

A separator was manufactured and evaluated under the same conditions as those in Example 2, except for changing the duration of the holding in the shaping process to one minute.

### (8) Example 8

A separator was manufactured and evaluated under the same conditions as those in Example 3, except for changing the duration of the holding in the shaping process to one minute.

### <Comparison Examples>

### (1) Comparison Example 1

To the recessed part inside the bottom mold structuring a separate-type mold, the mixture (the graphite + PPS) in the powder state resulting from the ball-mill pulverization was supplied. The mixture was powder mixture from 99 g of graphite powder and 30 g of PPS powder (corresponding to 330 parts by mass of graphite mixed with 100 parts by mass of PPS). Subsequently, a shaping process was performed by closing together the top mold and the bottom mold structuring the separate-type mold. The shaping process was performed with surface pressure of 360 kgf/cm², and the workpiece was held for three minutes so that the temperature of the mold increased up to 320°C. When the shaping process was finished, the mold was opened to take out the shaped body, and the manufacture of the separator was thus finished. The separator was evaluated by using the abovementioned evaluation method.

### (2) Comparison Example 2

Except for replacing the mixture (the graphite + PPS) with a powder mixture from 120 g of graphite powder and 12 g of PPS powder (corresponding to 1000 parts by mass of graphite mixed with 100 parts by mass of PPS), a separator was manufactured and evaluated under the same conditions as those in Example 1.

### 7. Results

Tables 1 and 2 present the manufacturing conditions of the examples and the comparison examples, together with evaluation results.

**[Table 1]**

| | EXAMPLE 1 | EXAMPLE 2 | EXAMPLE 3 | EXAMPLE 4 | EXAMPLE 5 |
|---|---|---|---|---|---|
| COMBINATION | M2888/1707SJ | M2888/1707SJ | M2888/1707SJ | M2888/1707SJ | M2888/1707SJ |
| PPS POWDER/GRAPHITE POWDER | 100 PARTS BY MASS/1000 PARTS BY MASS | 100 PARTS BY MASS/1000 PARTS BY MASS | 100 PARTS BY MASS/1000 PARTS BY MASS | 100 PARTS BY MASS/1000 PARTS BY MASS | 100 PARTS BY MASS/1000 PARTS BY MASS |
| SURFACE LAYERS | PEEK (THICKNESS OF FED FILM: 6 µm) | PPS (THICKNESS OF FED FILM: 4 µm) | PPS (THICKNESS OF FED FILM: 9 µm) | PEEK (THICKNESS OF FED FILM: 15 µm) | PEEK (THICKNESS OF FED FILM: 35 µm) |
| SHAPING TEMPERATURE °C | 360 | 330 | 330 | 360 | 360 |
| SHAPING PERIOD min | 3 | 3 | 3 | 3 | 3 |
| SHAPED PRODUCT THICKNESS mm | 1.0 | 1.0 | 1.0 | 1.0 | 1.0 |
| PLATE FORMABILITY | A | A | A | A | A |
| VOLUME RESISTIVITY mΩcm | 1.68 A | 1.93 A | 1.79 A | 1.98 A | 4.03 D |
| BENDING STRENGTH MPa | 53.5 B | 52.8 B | 55.2 B | 59.4 B | 62.1 A |
| BENDING STRAIN % | 0.78 B | 0.75 B | 0.80 A | 0.88 A | 0.94 A |
| He GAS PERMEABILITY COEFFICIENT mol·m/m²·sec·Pa | 4.82E-16 C | 5.39E-15 D | 1.35E-16 C | 5.15E-17 B | 1.04E-17 B |
| OVERALL EVALUATION | A (16 POINTS) | A (15 POINTS) | AA (17 POINTS) | AAA (18 POINTS) | A (16 POINTS) |

**[Table 2]**

| | EXAMPLE 6 | EXAMPLE 7 | EXAMPLE 8 | COMPARISO N EXAMPLE 1 | COMPARISO N EXAMPLE 2 |
|---|---|---|---|---|---|
| COMBINATION | M2888/1707S J | M2888/1707S J | M2888/1707S J | M2888/1707SJ | M2888/1707SJ |
| PPS POWDER/GRAPHIT E POWDER | 100 PARTS BY MASS/1000 PARTS BY MASS | 100 PARTS BY MASS/1000 PARTS BY MASS | 100 PARTS BY MASS/1000 PARTS BY MASS | 100 PARTS BY MASS/330 PARTS BY MASS | 100 PARTS BY MASS/1000 PARTS BY MASS |
| SURFACE LAYERS | PEEK (THICKNESS OF FED FILM: 6 µm) | PPS (THICKNESS OF FED FILM: 4 µm) | PPS (THICKNESS OF FED FILM: 9 µm) | NONE | NONE |
| SHAPING TEMPERATURE °C | 360 | 330 | 330 | 330 | 330 |
| SHAPING PERIOD min | 1 | 1 | 1 | 6 | 6 |
| SHAPED PRODUCT THICKNESS mm | 1.0 | 1.0 | 1.0 | 1.0 | 1.0 |
| PLATE FORMABILITY | A | A | A | FAIL | FAIL |
| VOLUME RESISTIVITY mΩcm | 1.34 A | 1.67 A | 1.55 A | 5.86 FAIL | 1.73 A |
| BENDING STRENGTH MPa | 59.5 B | 57.4 B | 58.7 B | 57.5 B | 45.4 FAIL |
| BENDING STRAIN % | 0.73 B | 0.72 B | 0.79 B | 0.65 C | 0.60 c |
| He GAS PERMEABILITY COEFFICIENT mol·m/m²·sec·Pa | 7.80E-18 A | 5.36E-17 B | 3.32E-18 A | 7.77E-17 B | 1.02E-12 FAIL |
| OVERALL EVALUATION | AAA (18 POINTS) | AA (17 POINTS) | AAA (18 POINTS) | FAIL | FAIL |

As for Comparison Example 1, the plate formability and the volume resistivity were each evaluated as a fail. The bending strength and the helium gas permeability coefficient were each evaluated as B. The bending strain was evaluated as C. The overall evaluation was a fail. As for Comparison Example 2, the plate formability, the helium gas permeability coefficient, and the bending strength were each evaluated as a fail. The bending strain was evaluated as C, but the volume resistivity was evaluated as A. The overall evaluation was a fail.

In contrast, as for Example 1, the plate formability and the volume resistivity were each evaluated as A. The bending strength and the bending strain were each evaluated as B. The helium gas permeability coefficient was evaluated as C. The overall evaluation was A (total score: 16 points). As for Example 2, the plate formability and the volume resistivity were each evaluated as A. The bending strength and the bending strain were each evaluated as B. The helium gas permeability coefficient was evaluated as D. The overall evaluation was A (total score: 15 points). As for Example 5, the plate formability, the bending strength, and the bending strain were each evaluated as A. The helium gas permeability coefficient was evaluated as B. The volume resistivity was evaluated as D. The overall evaluation was A (total score: 16 points). As for Example 3, the plate formability, the volume resistivity, and the bending strain were each evaluated as A. The bending strength was evaluated as B. The helium gas permeability coefficient was evaluated as C. The overall evaluation was AA (total score: 17 points). As for Example 7, the plate formability and the volume resistivity were each evaluated as A. The bending strength, the bending strain, and the helium gas permeability coefficient were each evaluated as B. The overall evaluation was AA (total score: 17 points.). Further, as for Example 4, the plate formability, the volume resistivity, and the bending strain were each evaluated as A. The bending strength and the helium gas permeability coefficient were each evaluated as B. The overall evaluation was AAA (total score: 18 points). As for Example 6 and Example 8, the plate formability, the volume resistivity, and the helium gas permeability coefficient were each evaluated as A. The bending strength and the bending strain were each evaluated as B. The overall evaluation was AAA (total score: 18 points).

From the results presented above, as Comparison Example 1 was compared with Examples 1 to 3, we were able to confirm the advantageous effects of providing the barrier layers as surface layers, regardless of the types of films and the thicknesses. Further, from the results of Example 1, Example 4, and Example 5, we were able to confirm that, as for the thickness of the barrier layers serving as the surface layers, the 15-µm PEEK film in Example 4 was optimal. Further, as a result of comparing Example 1 with Example 6, comparing Example 2 with Example 7, and comparing Example 3 with Example 8, we were able to confirm the advantageous effects of shortening the shaping period to one minute so that the surface layers each had a trace of the resin film remaining (the surface layers were present).

### Industrial Applicability

The fuel cell separator according to the present invention is applicable to fuel cells.

## Claims

1. A fuel cell separator comprising:
a plate that contains, as constituent materials thereof, graphite in a particulate or fiber form and resin in a particulate or fiber form; and
a barrier layer having a better gas barrier property than that of the plate, wherein
the plate comprises, on a surface thereof, a groove serving as a flow path, and
the barrier layer covers at least a surface on a front side and a surface on a rear side of the plate including the groove and surfaces of the plate other than the groove.

2. The fuel cell separator of claim 1, wherein
the barrier layer is a film-like covering layer different from the plate.

3. The fuel cell separator of claim 1, wherein
the barrier layer is a filling layer in which resin or rubber fills spaces between particles or fibers structuring the plate.

4. The fuel cell separator of claim 3, wherein
the barrier layer comprises the filling layer and a film-like covering layer different from the plate.

5. The fuel cell separator of any one of claims 1 to 4, wherein
the barrier layer wraps the plate.

6. The fuel cell separator of any one of claims 1 to 5, wherein
the barrier layer contains at least one selected from between polyether ether ketone and polyphenylene sulfide.

7. The fuel cell separator of any one of claims 1 to 6, wherein
the resin structuring the plate and resin structuring the barrier layer are thermoplastic resin of a mutually same type.

8. The fuel cell separator of any one of claims 1 to 7, wherein
at least one of the resin structuring the plate and resin structuring the barrier layer contains polyphenylene sulfide as a principal material thereof.

9. A method for manufacturing a fuel cell separator which comprises a plate that contains, as constituent materials thereof, graphite in a particulate or fiber form and resin in a particulate or fiber form and a barrier layer having a better gas barrier property than that of the plate, the method comprising:
a first film arranging step of arranging, in a mold, a first film for forming the barrier layer;
a shaping material arranging step of arranging, on the first film, a shaping material which is one selected from among a mixture obtained by mixing together at least the graphite and the resin, a grooved plate that is the plate comprising, on a surface thereof, a groove serving as a flow path, and a precursor plate that is the grooved plate in a state without the groove;
a second film arranging step of arranging, over the shaping material, a second film for forming the barrier layer; and
a shaping step of performing a shaping process by closing the mold while the shaping material is sandwiched between the first film and the second film, to form the barrier layer on both of the surfaces of the plate on a front side and on a rear side.

10. The method of claim 9, wherein
the shaping material is either the mixture obtained by mixing together at least the graphite and the resin or the precursor plate,
the mold comprises, on an inner side thereof, an uneven surface for transferring the groove, and
in the shaping step, either the mixture or the precursor plate is shaped, the groove is formed, and the barrier layer is formed on the surface on the front side and on the surface on the rear side of the plate, by using the mold comprising the uneven surface.

11. The method of claim 9, wherein
the shaping material is the grooved plate,
the mold comprises, on an inner side thereof, an uneven surface that is insertable into the groove, and
in the shaping step, the barrier layer is formed on a surface on the front side and on a surface on the rear side of the grooved plate, by using the mold.

12. The method of any one of claims 9 to 11, wherein
the first film and the second film become the barrier layer in a bag-like form to wrap the plate as a result of the shaping step.

13. The method of any one of claims 9 to 12, wherein
the resin in the mixture obtained by mixing together at least the graphite and the resin is resin powder in a flake form.

14. The method of any one of claims 9 to 13, wherein
the resin structuring the plate and resin structuring the barrier layer are thermoplastic resin of a mutually same type.

15. The method of any one of claims 9 to 14, wherein
at least one of the resin structuring the plate and resin structuring the barrier layer contains polyphenylene sulfide as a principal material thereof.
